Europäisches Patentamt

(19) European Patent Office

Office européen des brevets

(11) Publication number: **0 258 325**
**B1**

(12) **EUROPEAN PATENT SPECIFICATION**

(45) Date of publication of patent specification: **13.06.90**

(21) Application number: **87901321.7**

(22) Date of filing: **03.02.87**

(86) International application number:
**PCT/BR87/00003**

(87) International publication number:
**WO 87/04712 13.08.87 Gazette 87/18**

(51) Int. Cl.⁵: **C 07 F 9/38**

(54) **DRY ALKALI METAL GLYPHOSATE PROCESS.**

(30) Priority: **04.02.86 BR 8600460**

(43) Date of publication of application:
**09.03.88 Bulletin 88/10**

(45) Publication of the grant of the patent:
**13.06.90 Bulletin 90/24**

(84) Designated Contracting States:
**AT BE CH DE FR GB IT LI LU NL SE**

(56) References cited:
**EP-A-0 206 537**
**US-A-3 977 860**
**US-A-4 140 513**

(73) Proprietor: **MONSANTO COMPANY**
**800 North Lindbergh Boulevard**
**St. Louis Missouri 63167 (US)**

(72) Inventor: **TEIXEIRA COSTA FILHO, Geraldo**
**Rua Antonio Cesarino 474, Centro**
**13100 - Campinas, SP (BR)**
Inventor: **VON ZUBEN, Fernando, José**
**Rua Otimar Mergentheler 15, apt. 25**
**Jardim Bela Vista 13100 - Campinas, SP (BR)**
Inventor: **BERGSON FERNANDES BARRETO,**
**Henri**
**Rua Piquete 377 Nova Campinas**
**13100 - Campinas, SP (BR)**

(74) Representative: **Lunt, John Cooper et al**
**Monsanto Europe S.A. Patent Department**
**Avenue de Tervuren 270-272 Letter Box No 1**
**B-1150 Brussels (BE)**

Courier Press, Leamington Spa, England.

## Description

This invention relates to a process for preparing a particulate, alkali metal salt of N-phosphonomethylglycine, and especially the sodium salt of N-phosphonomethylglycine.

The compound N-phosphonomethylglycine, commonly known in the agricultural chemical art as glyphosate, is a well-known and widely used broad-spectrum herbicide. It is usually formulated with other adjuvants in the form of its watersoluble salts, especially the mono-isopropylamine salt. Certain of the alkali metal salts, especially the sodium salt, have also been prepared and used.

U.S. Patent 3,977,860 to John E. Franz discloses phytotoxic compositions, including concentrates which require dilution prior to application to the foliage of plants. Such compositions are prepared by mixing the active ingredient with an adjuvant, including diluents, extenders, carriers and conditioning agents, to provide compositions in the form of fine-divided particulate solids, pellets, solutions, dispersions, or emulsions. Thus, the active ingredient can be used with an adjuvant such as a finely-divided solid, a liquid or organic solvent, water, a wetting agent, a dispering agent, an emulsifying agent, or any suitable combination of these.

Although fine-divided particulate solids of N-phosphonomethylglycine have been disclosed in the prior art, it has been found in practice to be particularly difficult to prepare the alkali metal salts of N-phosphonomethylglycine in a particulate form. Typically, when an aqueous solution of the alkali metal salt of N-phosphonomethylglycine is spray-dried, or ever freeze-dried, it is difficult to remove sufficient water to form the solid material, and a paste is often obtained. (See for example US—A—4 140 513 which discloses sodium sesquiglyphosate and its preparation). Clearly it would be advantageous to provide a particulate, alkali metal N-phosphonomethylglycinate, not only for economy in shipping the product, but also for ease of use by the farmer. Merely adding such a product to water, along with any necessary adjuvants, would provide a herbicidal composition that could be more economically packaged and handled. Now it has been found that such a dry, particulate, alkali metal N-phosphonomethylglycinate can be prepared by the procees of the present invention.

### Summary of the Invention

These and other advantages are achieved by a method of preparing a particulate, alkali metal salt of N-phosphonomethylglycine, which comprises adding a solid alkali metal base with agitation to of N-phosphonomethylglycine containing up to 25% water.

### Detailed Description of the Invention

The N-phosphonomethylglycine for use in the method of the present invention can be prepared by any number of methods known to those skilled in the art. For example U.S. Patent 3,977,860 discloses that N-phosphonomethylglycines can be prepared by the phosphonomethylation of a glycine, preferably with chloromethylphosphonic acids. An alternate procedure disclosed in U.S. Patent 4,486,358 comprises reacting amino-methanephosphonic acid with glycoxal in an aqueous solution in the presence of sulfur dioxide. Many other processes have been disclosed in the prior art for the preparation of N-phosphonomethylglycine. Typically, in commercial operations, the N-phosphonomethylglycine is obtained as a solid or paste containing up to 25% water, and more typically contianing from about 15% to about 9% of water. This intermediate product is then reacted with a suitable base to provide a water soluble salt which can then be formulated into a herbicidal composition.

The alkali metal base for use in the method of the present invention include those bases of lithium, sodium, potassium and the like, such as the corresponding hydroxides, carbonates, and bicarbonates. Examples of such bases include lithium hydroxide, lithium bicarbonate, lithium carbonate, sodium hydroxide, sodium bicarbonate, sodium carbonate, potassium, hydroxide, potassium carbonate, and the like. Sodium hydroxide and sodium carbonate are preferred, and sodium hydroxide is especially preferred.

The quantity and the conditions under which the alkali metal base is added to the N-phosphonomethylglycine slurry depends upon the alkali metal base used and the concetration of solids in the aqueous slurry. For example, if the aqueous slurry of N-phosphonomethylglycine contains at least 75% solids, but less than about 85% solids, the material should be heated to a temperature above about 50°C, and preferably higher, before a stoichiometric quantity of the solid alkali metal base is assed with agitation to the N-phosphonomethylglycine. Under these conditions when using N-phosphonomethylglycine containing less than 85% solids, the use of sodium carbonate and sodium hydroxide is especially preferred, since the heat of reaction and heat of solubility of the potassium bases is not as high as that of sodium bases. The use of sodium hydroxide and sodium carbonate is especially preferred.

On the other hand, when the aqueous slurry of N-phosphonomethylglycine contains at least about 85% solids, it is desirable that some of the alkali metal base is added as an aqueous solution, say a 50% aqueous solution of the base, to provide sufficient water in the mixture to insure that the solid alkali metal base reacts with the N-phosphonomethylglycine to form the mono-alkali metal salt. Up to 70% of the alkali metal base can be added to the mixture as a 50% solution, but it is important in the process of the present invention that the remainder of the stoichiometric quantity of alkali metal base be added as the solid. The use of solid sodium hydroxide or sodium carbonate is preferred since the heat of solution and heat of reaction is sufficient to form the particulate alkali metal salt without the necessity of heating the slurry prior to the addition of the alkali metal base. However, when potassium hydroxide or potassium carbonate is used, it may be necessary to heat the N-phosphonomethylglycine to 50°C or above prior to the addition of the potassium base to insure that a paste does not form.

It is important in the method of the present invention that the slurry of N-phosphonomethylglycine is agitated, not only during the addition of the alkali metal base, but also during the cooling period, to insure that there is reaction between the alkali metal base and the N-phosphonomethylglycine, and to insure that the resulting product is particulate. As will occur to those skilled in the art, when the alkali metal base is a carbonate or bicarbonate, part of the agitation will be achieved by the evolution of carbon dioxide. However, other forms of agitation, such as stirring, blending, and the like, can be used, as will occur to those skilled in the art, and the means of agitation is not particularly important in the method of the present invention.

This invention is further illustrated by, but not limited to, the following examples:

### Example 1

To a laboratory-scale planetary mixer equipped with a stirrer, is placed 380 grams of N-phosphonomethylglycine (1.784 moles). While stirring at a rate of 120 revolutions per minute, 30 grams of a 49% aqueous solution of sodium hydroxide is added to the mixer. After about one minute, 22 grams of flake sodium hydroxide (0.535 moles) is added to the mixer. After the addition of the solid sodium hydroxide, the remainder of the stoichiometric amount of sodium hydroxide (71.95 grams) as a 50 percent solution is added as rapidly as possible. The material in the mixer turns to a liquid and remains in the liquid state for approximately 15 seconds. Then it gradually turns to a paste, and finally, to a finely-divided solid mono-sodium N-phosphonomethylglycinate.

### Example 2

The procedure of Example 1 is repeated except that 50 grams of 50% sodium hydroxide solution is added to the mixer, then the flake sodium hydroxide, and thereafter the remainder of the 50% solution of sodium hydroxide to from the stoichiometric quantity of sodium hydroxide to form the mono-sodium salt of N-phosphonomethylglycine. After the material in the mixer turns to the liquid state, it remains in the liquid state for approximately 90 seconds. The overall reaction time is between about 13 and about 15 minutes. The temperature rises to approximately 110°C. Upon cooling while stirring, finely-divided mono-sodium N-phosphonomethylglycinate is obtained.

### Example 3

To the planetary mixer of Example 1 is added an 85% slurry of N-phosphonomethylglycine (380 grams). This slurry is heated to 65°C, and thereafter, 35 grams of 50% potassium hydroxide solution is added. Then, 69.9 grams of potassium hydroxide pellets are added cautiously to the heated and stirred slurry. While stirring until the material cools to a solid, a particulate monopotassium N-phosphonomethylglycinate is obtained.

Although the invention has been described in terms of specified embodiments which are set forth in considerable detail, it should be understood that this is by illustration only, since alternative embodiments and operating techniques will become apparent to those skilled in the art in view of the disclosure. For example, other alkali metal salt of N-phosphonomethylglycine can be obtained by changing the stoichiometry between the alkali metal base and the N-phosphonomethylglycine have been found to have herbicidal properties, and such derivatives can also be prepared as a particulate material by slight changes to the method of the present invention. In addition, certain adjuvants such as a particular surface active agent and the like, could be added to either the slurry of N-phosphonomethylglycine before the solid base is added, or thereafter, to provide a particulate mono-alkali salt of N-phosphonomethylglycine with the desired adjuvant, and further formulation may not be required. Accordingly, modifications can be made without departing from the spirit of the described invention.

## Claims

1. A method of preparing a particulate alkali metal salt of N-phosphonomethylglycine, which comprises adding a solid alkali metal base with agitation to N-phosphonomethylglycine containing up to 25% water.

2. A method of Claim 1 wherein the N-phosphonomethylglycine contains up to 25% water and is heated to a temperature above about 50°C.

3. A method of Claim 2 wherein the alkali metal base is selected from the group consisting of sodium hydroxide and sodium carbonate.

4. A method of Claim 1 wherein the N-phosphonomethylglycine contains up to about 15% water, and up to 70 percent of the alkali metal base is added to the slurry as a 50 percent solution, the remainder of the alkali metal base being added as the solid.

5. A method of Claim 4 wherein the alkali metal base is selected from the group consisting of sodium hydroxide and sodium carbonate.

6. A method of Claim 4 wherein the alkali metal base is selected from the group consisting of potassium hydroxide and potassiumm carbonate and the of N-phosphonomethylglycine is heated to at least about 50°C.

7. A method of Claim 5 wherein up to 50 percent of the alkali metal base is added as a 50 percent solution, the remainder being added as a solid.

8. A method of Claim 7 wherein the alkali metal base is sodium hydroxide.

9. A particulate mono-sodium N-phosphonomethylglycinate prepared by the method of Claim 1.

## Patentansprüche

1. Verfahren zum Herstellen eines teilchenförmigen Alkalimetallsalzes von N-Phosphonomethylglycin, welches das Zusetzen einer festen Alkalimetallbase zu N-Phosphonomethylglycin mit einem Gehalt bis zu 25% Wasser unter Bewegung umfaßt.

2. Verfahren nach Anspruch 1, worin das N-Phosphonomethylglycin bis zu 25% Wasser enthält und auf eine Temperatur oberhalb etwa 50°C erhitzt wird.

3. Verfahren nach Anspruch 2, worin die Alkalimetallbase ausgewählt wird aus der Gruppe bestehend aus Natriumhydroxid und Natriumcarbonat.

4. Verfahren nach Anspruch 1, worin das N-Phosphonomethylglycin bis zu etwa 15% Wasser enthält und bis zu 70% der Alkalimetallbase zu der Aufschlämmung als 50%ige Lösung zugestzt werden, wobei der Rest der Alkalimetallbase als Feststoff zugegeben wird.

5. Verfahren nach Anspruch 4, worin die Alkalimetallbase ausgewählt wird aus der Gruppe bestehend aus Natriumhydroxid und Natriumcarbonat.

6. Verfahren nach Anspruch 4, worin die Alkalimetallbase ausgewählt wird aus der Gruppe bestehend aus Kaliumhydroxid und Kaliumcarbonat und das N-Phosphonomethylglycin auf mindestens etwa 50°C erhitzt wird.

7. Verfahren nach Anspruch 5, worin bis zu 50% der Alkalimetallbase als 50%ige Lösung zugesetzt werden, wobei der Rest als Feststoff zugegeben wird.

8. Verfahren nach Anspruch 7, worin die Alkalimetallbase Natriumhydroxid ist.

9. Teilchenförmiges Mononatrium-N-phosphonomethylglycinat, hergestellt nach dem Verfahren von Anspruch 1.

## Revendications

1. Procédé de préparation d'un sel de métal alcalin de N-phosphonométhylglycine particulaire, qui comprend l'addition d'une base de métal alcaline solide, en agitant, à de la N-phosphonométhylglycine contentant jusqu'à 25% d'eau.

2. Procédé selon la revendication 1, dans lequel la N-phosphonométhylglycine contient jusqu'à 25% d'eau et dans lequel on la chauffe jusqu'à une température supérieure à environ 50°C.

3. Procédé selon la revendication 2, dans lequel la base de métal alcalin est choisie dans le groupe constitué par l'hydroxyde de sodium et le carbonate de sodium.

4. Procédé selon la revendication 1, dans lequel la N-phosphonométhylglycine contient jusqu'à environ 15% d'eau, et dans lequel on ajoute jusqu'à 70% de la base métal alcalin à la bouillie sous forme d'une solution à 50%, le reste de la base de métal alcalin étant ajouté sous forme solide.

5. Procédé selon la revendication 4, dans lequel la base de métal alcalin est choisie dans le groupe constitué par l'hydroxyde de sodium et le carbonate de sodium.

6. Procédé selon la revendication 4, dans lequel la base de métal alcalin est choisie dans le groupe constitué par l'hydroxyde de potassium et le carbonate de potassium, et dans lequel on chauffe la N-phosphonométhylglycine jusqu'à au moins environ 50°C

7. Procédé selon la revendication 5, dans lequel on ajoute jusqu'à 50% de la base de métal alcalin sous forme d'une solution à 50%, le reste étant ajouté sous forme solide.

8. Procédé selon la revendication 7, dans lequel la base de métal alcalin est l'hydroxyde de sodium.

9. N-phosphonométhylglycinate monosodique particulaire préparé par le procédé selon la revendication 1.